# EUROPEAN PATENT APPLICATION

(11) **EP 4 443 127 A1**
(43) Date of publication of application: **09.10.2024**
(21) Application number: 22918819.8
(22) Date of filing: 21.12.2022
(51) Int. Cl.: G01M 99/00, G01H 17/00

(54) **VIBRATION MONITORING DEVICE, SUPERCHARGER, AND VIBRATION MONITORING METHOD**

(30) Priority: 07.01.2022 JP 2022001573
(71) Applicant: Mitsubishi Heavy Industries Marine Machinery & Equipment Co., Ltd., Nagasaki-shi Nagasaki 850-8610 (JP)
(72) Inventor: YOSHIDA, Tadashi, Tokyo 100-8332 (JP); NISHIMURA, Hidetaka, Nagasaki-shi, Nagasaki 850-8610 (JP); TANAKA, Akifumi, Nagasaki-shi, Nagasaki 850-8610 (JP); TAKESHITA, Tomoaki, Tokyo 100-8332 (JP); OGAWA, Shinji, Tokyo 100-8332 (JP); SASAKI, Ryoji, Tokyo 100-8332 (JP)
(74) Representative: Cabinet Beau de Loménie
(86) International application number: PCT/JP2022/047045
(87) International publication number: WO 2023/132235

(57) **Abstract**

This vibration monitoring device comprises: a rotation sensor for outputting a rotation signal synchronized to rotation of a rotating shaft; a cut rotation signal generating unit for generating a cut rotation signal when the rotation signal is output from the rotating sensor, by replacing a part of the rotation signal equal to or greater than a predetermined limit value with the limit value, and leaving as the rotation signal, without modification, parts of the rotation signal that are less than the limit value; an offset rotation signal generating unit for generating an offset rotation signal obtained by offsetting the cut rotation signal to approach the limit value; and a first filter for extracting, from within the offset rotation signal, a signal in a passband set on the basis of a rotational speed of the rotating shaft, as a vibration signal enabling vibration information of the rotating shaft to be acquired.

## Description

### Technical Field

The present disclosure relates to a vibration monitoring device, a turbocharger, and a vibration monitoring method.

The present application claims priority based on Japanese Patent Application No. 2022-001573 filed in Japan on January 7, 2022, the contents of which are incorporated herein by reference.

### Background Art

PTL 1 discloses a technique of separating a signal detected by a non-contact displacement sensor into a rotation pulse signal of a rotating shaft and a shaft vibration waveform signal of the rotating shaft.

### Citation List

### Patent Literature

[PTL 1] Japanese Unexamined Patent Application Publication No. 7-253493

### Summary of Invention

### Technical Problem

However, in the technique disclosed in PTL 1, raw waveform data of the rotation signal of the rotating shaft detected from the displacement sensor is stored as time-series data, and the rotation signal is separated into the rotation pulse signal and the shaft vibration waveform signal by comparing the stored time-series data with a threshold value calculated from the time-series data. For this reason, the vibration of the rotating shaft cannot be evaluated in real time, and when a change in the rotation speed of the rotating shaft is large, the evaluation of the vibration of the rotating shaft is delayed, which is a risk.

The present disclosure has been made in view of the above-described problems, and an object of the present disclosure is to provide a vibration monitoring device and a monitoring method capable of evaluating vibration of a rotating shaft in real time from a rotation signal of the rotating shaft.

### Solution to Problem

In order to achieve the foregoing object, a vibration monitoring device according to the present disclosure includes a rotation sensor that outputs a rotation signal synchronized with a rotation of a rotating shaft; a cut rotation signal generation unit that generates a cut rotation signal by replacing a portion of the rotation signal equal to or greater than a limit value set in advance with the limit value and by causing a portion of the rotation signal less than the limit value to remain as the rotation signal, when the rotation signal is output from the rotation sensor; an offset rotation signal generation unit that generates an offset rotation signal by offsetting the cut rotation signal to approach the limit value; and a first filter that extracts a signal in a passband set based on a rotation speed of the rotating shaft from the offset rotation signal as a vibration signal from which vibration information of the rotating shaft is acquirable.

In order to achieve the foregoing object, a vibration monitoring method according to the present disclosure includes a step of outputting a rotation signal synchronized with a rotation of a rotating shaft; a step of generating a cut rotation signal by replacing a portion of the rotation signal equal to or greater than a limit value set in advance with the limit value and by causing a portion of the rotation signal less than the limit value to remain as the rotation signal, when the rotation signal is output; a step of generating an offset rotation signal by offsetting the cut rotation signal to approach the limit value; and a step of extracting a signal in a passband set based on a rotation speed of the rotating shaft from the offset rotation signal as a vibration signal from which vibration information of the rotating shaft is acquirable.

### Advantageous Effects of Invention

According to the vibration monitoring device and the vibration monitoring method of the present disclosure, the vibration of the rotating shaft can be evaluated in real time from the rotation signal of the rotating shaft.

### Brief Description of Drawings

Fig. 1 is a diagram schematically showing a configuration of a turbocharger to which a vibration monitoring device according to a first embodiment is applied.
Fig. 2 is a diagram schematically showing a configuration of a marker portion according to the first embodiment.
Fig. 3 is a waveform diagram of a rotation signal output by a rotation sensor according to the first embodiment.
Fig. 4 is a schematic functional block diagram of a processing device according to the first embodiment.
Fig. 5 is a waveform diagram of a cut rotation signal according to the first embodiment.
Fig. 6 is a waveform diagram of an offset rotation signal according to the first embodiment.
Fig. 7 is a schematic functional block diagram of an output device according to the first embodiment.
Fig. 8 is a diagram showing a characteristic table of a first filter according to the first embodiment.
Fig. 9 is a waveform diagram of a vibration signal according to the first embodiment.
Fig. 10 is a schematic functional block diagram of a processing device according to a second embodiment.
Fig. 11 is a diagram for describing an average value according to the second embodiment.
Fig. 12 is a diagram schematically showing a configuration of a vibration monitoring device according to a third embodiment.
Fig. 13 is a diagram schematically showing a configuration of a vibration monitoring device according to a fourth embodiment.
Fig. 14 is a schematic functional block diagram of a post-processing device according to the fourth embodiment.
Fig. 15 is a diagram schematically showing a configuration of a vibration monitoring device according to a fifth embodiment.
Fig. 16A is a diagram showing an operation of a vibration waveform restoration unit according to the fifth embodiment.
Fig. 16B is a diagram for describing an operation of the vibration waveform restoration unit according to the fifth embodiment.
Fig. 16C is a diagram for describing an operation of the vibration waveform restoration unit according to the fifth embodiment.
Fig. 16D is a diagram for describing an operation of the vibration waveform restoration unit according to the fifth embodiment.
Fig. 17 is a flowchart of a vibration monitoring method according to the present disclosure.

### Description of Embodiments

Hereinafter, a vibration monitoring device, a turbocharger, and a vibration monitoring method according to embodiments of the present disclosure will be described with reference to the drawings. Such embodiments show one aspect of the present disclosure, do not limit this disclosure, and can be optionally changed within the scope of the technical concept of the present disclosure.

### <First embodiment>

### (Configuration of turbocharger)

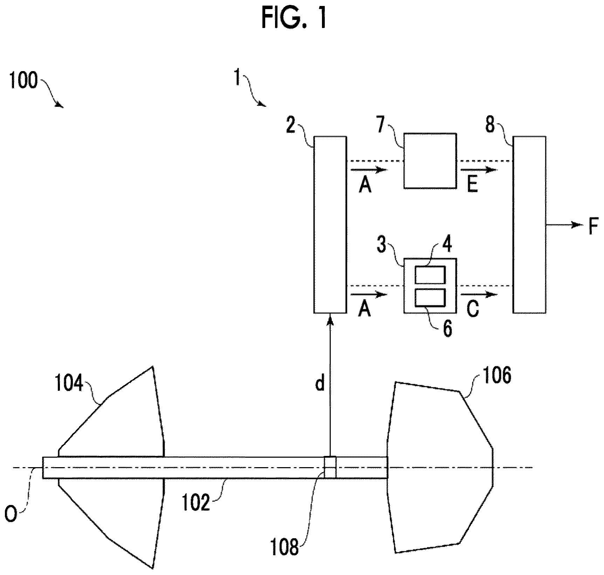

Fig. 1 is a diagram schematically showing a configuration of a turbocharger 100 to which a vibration monitoring device 1 according to a first embodiment is applied. The turbocharger 100 is not particularly limited, and is, for example, an exhaust turbocharger that is mounted on a ship to boost intake air of an engine. In the present disclosure, the exhaust turbocharger will be described as an example.

As illustrated in Fig. 1, the turbocharger 100 includes a rotating shaft 102, a compressor 104, a turbine 106, and the vibration monitoring device 1 according to the first embodiment. The compressor 104 is provided at one end portion (left end portion in Fig. 1) of the rotating shaft 102 in an axis O direction. The turbine 106 is provided at the other end portion (right end portion in Fig. 1) of the rotating shaft 102 in the axis O direction. The rotating shaft 102 connects the compressor 104 and the turbine 106.

The compressor 104 compresses the intake air and supplies the compressed intake air to the engine (not illustrated). When exhaust gas discharged from the engine passes through the turbine 106, the turbine 106 converts the energy of the exhaust gas into rotational energy of the turbine 106. The rotating shaft 102 rotates about an axis O along with the rotation of the turbine 106. The compressor 104 is driven by the rotation of the rotating shaft 102.

In the first embodiment, as illustrated in Fig. 1, the rotating shaft 102 includes a marker portion 108 which is configured such that a rotation signal A to be described later has a pulse waveform. The marker portion 108 is provided between the compressor 104 and the turbine 106 in the axis O direction. The marker portion 108 is provided on a turbine 106 side between the compressor 104 and the turbine 106 in the axis O direction. In some embodiments, the marker portion 108 is provided on one end side of the rotating shaft 102 with respect to the compressor 104 in the axis O direction.

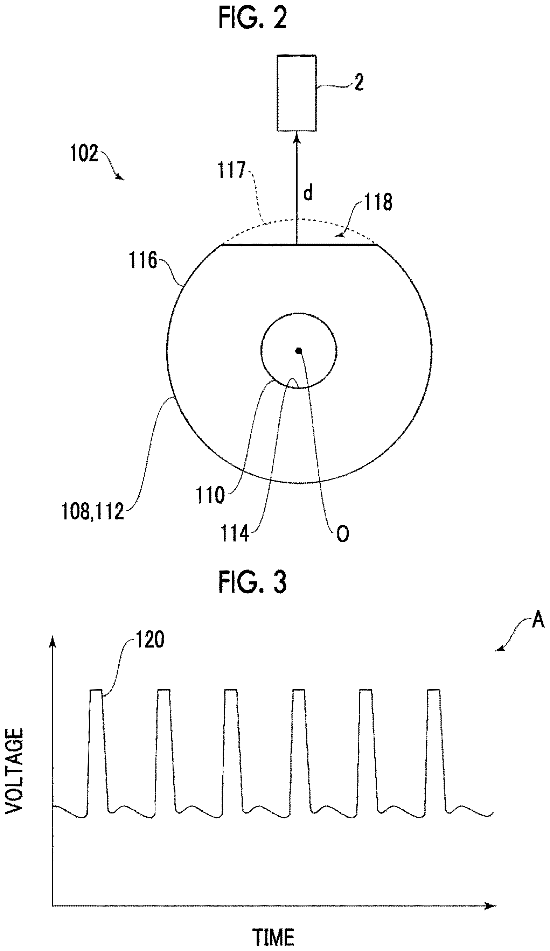

A configuration example of the marker portion 108 will be described. Fig. 2 is a diagram schematically showing a configuration of the marker portion 108 according to the first embodiment. In the mode illustrated in Fig. 2, the rotating shaft 102 includes an inner rotating body 110 and an outer rotating body 112. The inner rotating body 110 of the rotating shaft 102 rotates about the axis O along with the rotation of the turbine 106. A hole 114 into which the inner rotating body 110 is fitted is formed in the outer rotating body 112. In other words, the outer rotating body 112 is attached to the inner rotating body 110 to cover an outer peripheral surface of the inner rotating body 110. The outer rotating body 112 rotates as the inner rotating body 110 fitted into the hole 114 rotates. The outer rotating body 112 includes a groove 118 formed on an outer peripheral surface 116. When the groove 118 is not formed, the outer peripheral surface 116 of the outer rotating body 112 has a circular shape. The groove 118 is formed by cutting out a part 117 of the outer peripheral surface 116 having a circular shape toward the axis O. In the mode illustrated in Fig. 2, the outer rotating body 112 includes one groove 118. The outer rotating body 112 corresponds to the marker portion 108. In some embodiments, the outer rotating body 112 includes a plurality of the grooves 118. In some embodiments, the outer rotating body 112 includes two grooves 118, and one groove 118 is located opposite to the other groove 118 with the axis O interposed therebetween. Two grooves 118 are formed on the outer rotating body 112 to be left-right symmetrical about the axis O.

The marker portion 108 is not limited to the mode illustrated in Fig. 2 as long as the rotation signal A is configured to have a pulse waveform. For example, the marker portion 108 (outer rotating body 112) may include a protrusion portion that protrudes toward a radially outer side from the part 117 of the outer peripheral surface 116, instead of the groove 118.

### (Configuration of vibration monitoring device according to first embodiment)

Returning to Fig. 1, a configuration of the vibration monitoring device 1 will be described. As illustrated in Fig. 1, the vibration monitoring device 1 includes a rotation sensor 2, a cut rotation signal generation unit 4, an offset rotation signal generation unit 6, and a first filter 8.

The rotation sensor 2 outputs the rotation signal A synchronized with the rotation of the rotating shaft 102. As illustrated in Fig. 2, the rotation sensor 2 is an eddy current displacement sensor that detects a distance d to the outer peripheral surface 116 of the rotating shaft 102 as the rotation signal A by generating an eddy current on the outer peripheral surface 116 of the rotating shaft 102. More specifically, the rotation sensor 2 is made of a coil that generates a high-frequency magnetic flux, and detects a change in the eddy current generated on the outer peripheral surface 116 of the rotating shaft 102, which is a target (measurement object), due to the high-frequency magnetic flux generated from the coil as a change in the impedance of the coil. Namely, since the rotation sensor 2 detects a change in the distance d caused by the rotation of the rotating shaft 102 as a change in the impedance of the coil, the rotation sensor 2 is configured to obtain a maximum output when the outer peripheral surface 116 of the rotating shaft 102 becomes closest to the rotation sensor 2.

The rotation sensor 2 is not limited to the eddy current displacement sensor. In some embodiments, the rotation sensor 2 is a laser displacement sensor that includes a laser head which performs irradiation with laser light, and that irradiates the outer peripheral surface 116 of the rotating shaft 102 with the laser light to detect a distance from the laser head to the outer peripheral surface 116 of the rotating shaft 102 using reflected light of the laser light.

Fig. 3 is a waveform diagram of the rotation signal A output by the rotation sensor 2 according to the first embodiment. In the first embodiment, the rotation sensor 2 outputs the rotation signal A as a voltage value. As shown in Fig. 3, the rotation signal A has a pulse waveform formed along with the rotation of the rotating shaft 102 since the marker portion 108 (outer rotating body 112) of the rotating shaft 102 described above includes the groove 118. Namely, during the rotation of the rotating shaft 102, when the rotation sensor 2 and the groove 118 face each other, the displacement therebetween increases. On the other hand, during the rotation of the rotating shaft 102, when the rotation sensor 2 and the groove 118 do not face each other, the displacement is small. In the first embodiment, since the marker portion 108 includes one groove 118, one pulse (a portion 120 at which the displacement of the waveform is large) appears during one rotation of the rotating shaft 102.

In the first embodiment, as illustrated in Fig. 1, the vibration monitoring device 1 includes a processing device 3 including the cut rotation signal generation unit 4 and the offset rotation signal generation unit 6, and an output device 7.

Each of the processing device 3 and the output device 7 is a computer such as an electronic control device, and includes a processor such as a CPU or a GPU (not illustrated), a memory such as a ROM or a RAM, an I/O interface, and the like. Each of the processing device 3 and the output device 7 realizes each functional unit included in each of the processing device 3 and the output device 7 by operating (calculating or the like) the processor according to a command of a program loaded into the memory. In some embodiments, at least one of the processing device 3 or the output device 7 is a cloud server provided in a cloud environment. In the first embodiment, each of the cut rotation signal generation unit 4 and the offset rotation signal generation unit 6 is provided in the common processing device 3; however, the present disclosure is not limited to this configuration. In some embodiments, the cut rotation signal generation unit 4 and the offset rotation signal generation unit 6 are provided in the separate processing devices 3.

Each of the processing device 3 and the output device 7 is electrically connected to the rotation sensor 2, and can acquire the rotation signal A output from the rotation sensor 2.

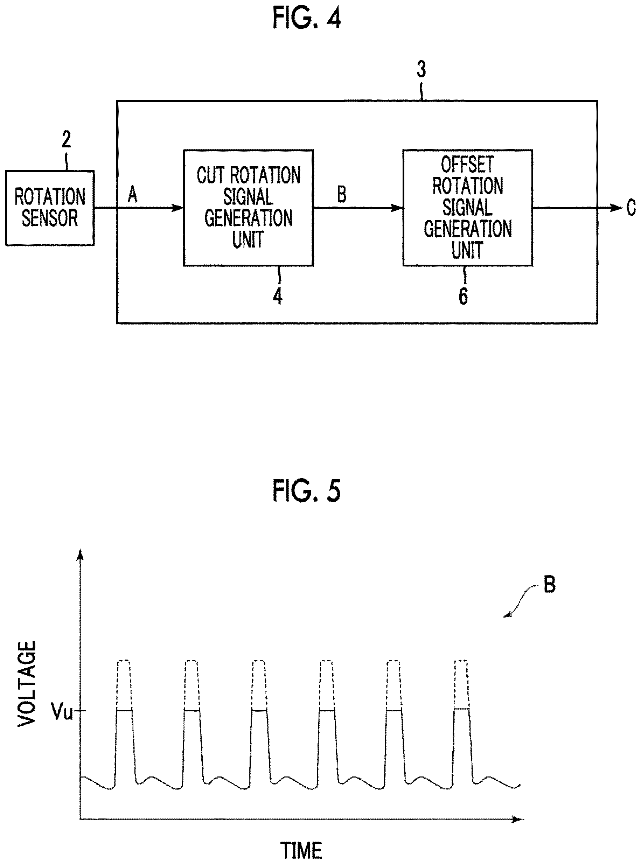

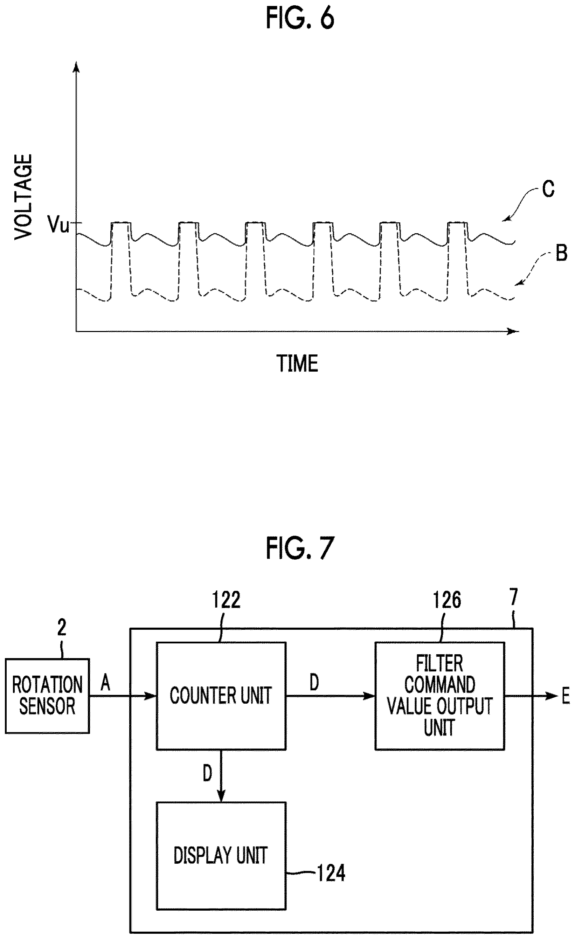

Each of the cut rotation signal generation unit 4 and the offset rotation signal generation unit 6 included in the processing device 3 will be described. Fig. 4 is a schematic functional block diagram of the processing device 3 according to the first embodiment. Fig. 5 is a waveform diagram of a cut rotation signal B according to the first embodiment. Fig. 6 is a waveform diagram of an offset rotation signal C according to the first embodiment.

When the rotation signal A is output from the rotation sensor 2, the cut rotation signal generation unit 4 generates the cut rotation signal B by replacing portions of the rotation signal A equal to or greater than a limit value Vu (upper limit value) set in advance with the limit value Vu and by causing portions of the rotation signal A less than the limit value Vu to remain as the rotation signal A.

In the first embodiment, as illustrated in Fig. 4, the cut rotation signal generation unit 4 receives the rotation signal A output from the rotation sensor 2. Then, as illustrated in Fig. 5, the cut rotation signal generation unit 4 replaces portions (dotted-line portions in Fig. 5) of the received rotation signal A equal to or greater than the limit value Vu with the limit value Vu. Further, the cut rotation signal generation unit 4 generates the cut rotation signal B by causing portions of the received rotation signal A less than the limit value Vu to remain as the rotation signal A.

The limit value Vu will be described. The limit value Vu is a value smaller than the maximum value of the rotation signal A. The limit value Vu is a value obtained by converting the size of a gap between the rotating shaft 102 and a bearing that supports the rotating shaft 102, more specifically, the size of a gap between the outer peripheral surface 116 of the outer rotating body 112 and a bearing surface of the bearing into a voltage value, and is, for example, 10 V. By setting the limit value Vu, a shaft vibration component of the rotating shaft 102 can be prevented from being cut out from the cut rotation signal B when the rotating shaft 102 vibrates by a size equal to or greater than the gap and comes into contact with the bearing.

In some embodiments, when the rotation signal A is output from the rotation sensor 2, the cut rotation signal generation unit 4 replaces portions of the rotation signal A equal to or greater than an upper limit value set in advance with the upper limit value, and replaces portions of the rotation signal A equal to or less than a lower limit value set in advance with the lower limit value. Then, the cut rotation signal generation unit 4 generates the cut rotation signal B by causing portions of the rotation signal A less than the upper limit value and larger than the lower limit value to remain as the rotation signal A.

The offset rotation signal generation unit 6 generates the offset rotation signal C by offsetting the cut rotation signal B to approach the limit value Vu.

In the first embodiment, as illustrated in Fig. 4, the offset rotation signal generation unit 6 receives the cut rotation signal B output from the cut rotation signal generation unit 4. Then, as illustrated in Fig. 6, the offset rotation signal generation unit 6 offsets the received cut rotation signal B by an offset amount, which is set in advance, to approach the limit value Vu. The offset amount may be a fixed value determined in advance, or may be a calculation value calculated by a predetermined method. Further, the offset rotation signal generation unit 6 generates the offset rotation signal C by replacing portions of the cut rotation signal B after offset, which is equal to or greater than the limit value Vu, through offsetting the cut rotation signal B with the limit value Vu.

The output device 7 will be described. The output device 7 outputs a filter command value E corresponding to a rotation speed D of the rotating shaft 102 calculated from the rotation signal A. Fig. 7 is a schematic functional block diagram of the output device 7 according to the first embodiment. As illustrated in Fig. 7, the output device 7 includes a counter unit 122, a display unit 124, and a filter command value output unit 126.

The counter unit 122 receives the rotation signal A output from the rotation sensor 2. Then, the counter unit 122 counts the number of pulses included in the rotation signal A per unit time, and calculates the rotation speed D of the rotating shaft 102. The display unit 124 displays the rotation speed D of the rotating shaft 102, which is calculated by the counter unit 122, on a display device such as a monitor. The display device may be included in the output device 7, or may be provided separately from the output device 7.

The filter command value output unit 126 outputs the filter command value E corresponding to the rotation speed D of the rotating shaft 102 calculated by the counter unit 122. In the first embodiment, the filter command value E is a voltage value into which the rotation speed D of the rotating shaft 102 is converted by a conversion method set in advance. This conversion method is set based on characteristics of the first filter 8 to be described later. In the first embodiment, when the rotation speed D of the rotating shaft 102 increases, the filter command value E (voltage value) also increases. In some embodiments, the rotation speed D of the rotating shaft 102 and the filter command value E are proportional to each other. In some embodiments, the filter command value E is a voltage value into which the rotation speed D of the rotating shaft 102 is converted by a conversion method set in advance.

The first filter 8 extracts a signal in a passband, which is set based on the rotation speed D of the rotating shaft 102, from the offset rotation signal C as a vibration signal F from which vibration information of the rotating shaft 102 can be acquired.

In the first embodiment, as illustrated in Fig. 1, the first filter 8 is electrically connected to each of the processing device 3 and the output device 7, and can acquire each of the offset rotation signal C output from the processing device 3 and the filter command value E output from the output device 7. Then, the first filter 8 receives the offset rotation signal C and the filter command value E to output (extract) the vibration signal F. The vibration signal F is a signal from which the vibration information of the rotating shaft 102 can be acquired. The vibration information is, for example, the frequency of vibration, the magnitude of vibration, the speed of vibration, or the like.

The first filter 8 is configured such that a first cutoff frequency P1 is set according to the filter command value E (voltage value). The first filter 8 passes the offset rotation signal C having a frequency smaller than the first cutoff frequency P1, and cuts off the offset rotation signal C having a frequency equal to or higher than the first cutoff frequency P1, out of the offset rotation signals C output by the processing device 3. Namely, the first filter 8 is a low-pass filter. The first filter 8 extracts the offset rotation signal C having a frequency smaller than the first cutoff frequency P1, as the vibration signal F. In such a manner, the passband (frequency band in which the frequency is smaller than the first cutoff frequency P1) of the signal in the first filter 8 is set according to the filter command value E. The first filter 8 extracts a signal in the passband, which is set according to the filter command value E, from the offset rotation signal C as the vibration signal F.

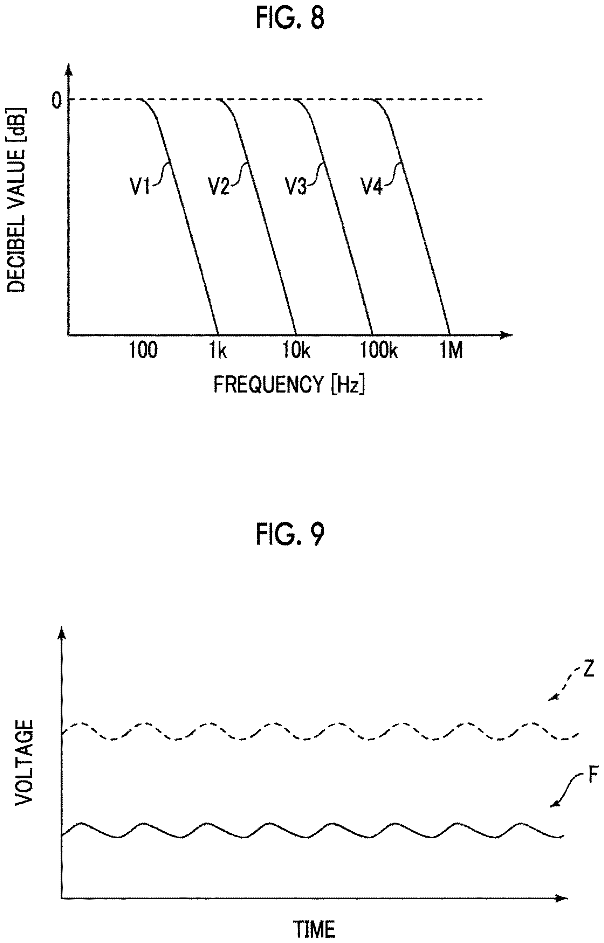

Here, the setting of the first cutoff frequency P1 will be described. Fig. 8 is a diagram showing a characteristic table of the first filter 8 according to the first embodiment. In Fig. 8, the horizontal axis represents the frequency expressed on a logarithmic scale, and the vertical axis represents the decibel value. In Fig. 8, the characteristic of the first filter 8 when the voltage value (filter command value E) is 0.01 V is indicated by V1, the characteristic of the first filter 8 when the voltage value is 0.1 V is indicated by V2, the characteristic of the first filter 8 when the voltage value is 1 V is indicated by V3, and the characteristic of the first filter 8 when the voltage value is 10 V is indicated by V4.

The decibel value corresponds to the signal intensity, and when the decibel value is less than 0, the vibration signal F extracted by the first filter 8 is attenuated. As shown in Fig. 8, at each voltage value (V1 to V4), as the frequency increases, the decibel value decreases, and the attenuation rate of the vibration signal F increases. More specifically, when the voltage value input to the first filter 8 is 0.1 V (V2 in Fig. 8), the vibration signal F is extracted by cutting off the offset rotation signal C of 1 kHz or more out of the offset rotation signal C input to the first filter 8. In the first embodiment, the first filter 8 sets the first cutoff frequency P1 such that the decibel value becomes 0. For example, when the voltage value is 0.1 V, the first filter 8 sets the first cutoff frequency to 1 kHz.

Fig. 9 is a waveform diagram of the vibration signal F according to the first embodiment. As shown in Fig. 9, when the offset rotation signal C (vibration signal F) having a frequency smaller than the first cutoff frequency P1 is extracted from the offset rotation signal C, the waveform of the offset rotation signal C is similar to the waveform of a net actual vibration signal Z generated by the vibration of the rotating shaft 102.

(Actions and effects of vibration monitoring device according to first embodiment)

According to the first embodiment, when the rotation signal A is output from the rotation sensor 2, the offset rotation signal C is generated, and the vibration signal F is extracted in real time from the offset rotation signal C. For this reason, the vibration of the rotating shaft 102 can be evaluated in real time from the rotation signal A of the rotating shaft 102. Further, the cut rotation signal B is such that portions of the rotation signal A equal to or greater than the limit value Vu are replaced with the limit value Vu. For this reason, in the extraction of the vibration signal F by the first filter 8, the influence of the pulses of the rotation signal A can be suppressed.

According to the first embodiment, since the limit value Vu is smaller than the maximum value of the rotation signal A, the generation of the cut rotation signal B by replacing portions of the rotation signal A equal to or greater than the limit value Vu with the limit value Vu is facilitated, and the effect of suppressing the influence of the pulses of the rotation signal A can be increased.

According to the first embodiment, by appropriately setting the passband of the first filter 8 according to the rotation speed D of the rotating shaft 102, the vibration signal F in the passband suitable for evaluating the vibration of the rotating shaft 102 can be extracted from the rotation signal A synchronized with the rotation of the rotating shaft 102 (refer to Fig. 9).

According to the first embodiment, it is possible to provide the turbocharger 100 capable of evaluating the vibration of the rotating shaft 102 of the turbocharger 100 in real time from the rotation signal A of the rotating shaft 102 of the turbocharger 100. According to the first embodiment, the vibration of the rotating shaft 102 in which one groove 118 is formed on the outer peripheral surface 116 of the outer rotating body 112 of the rotating shaft 102 can be evaluated in real time.

In the first embodiment, the passband of the first filter 8 is set according to the filter command value E; however, the present disclosure is not limited to this mode as long as the passband of the first filter 8 is set based on the rotation speed D of the rotating shaft 102.

### <Second embodiment>

The vibration monitoring device 1 according to a second embodiment of the present disclosure will be described. The second embodiment is different from the first embodiment in that the processing device 3 further includes an average value calculation unit 10, but the other configurations are the same as the configurations described in the first embodiment. In the second embodiment, the same components as those in the first embodiment are denoted by the same reference signs, and the detailed descriptions thereof will not be repeated.

### (Configuration of vibration monitoring device according to second embodiment)

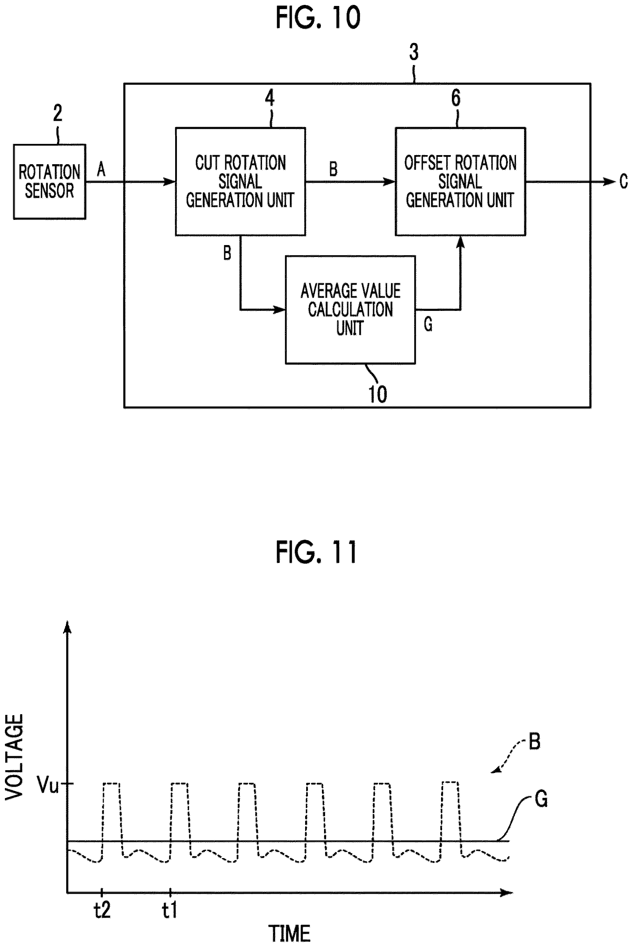

Fig. 10 is a schematic functional block diagram of the processing device 3 according to the second embodiment. As illustrated in Fig. 10, the processing device 3 further includes the average value calculation unit 10.

The average value calculation unit 10 calculates an average value G of the magnitudes of the cut rotation signal B in real time during the rotation of the rotating shaft 102. In the second embodiment, as illustrated in Fig. 10, the cut rotation signal B output from the cut rotation signal generation unit 4 is received. Then, as illustrated in Fig. 11, the average value calculation unit 10 calculates the average value G of the magnitudes of the cut rotation signal B in a specific section using a moving average method. The specific section is, for example, a time between a timing t1 at which a pulse (the portion 120 at which the displacement of the waveform of the cut rotation signal B indicated by a dotted line in Fig. 11 is large) appears and a timing t2 at which a pulse immediately preceding this pulse appears. The average value calculation unit 10 calculates the average value G of the magnitudes of the cut rotation signal B from the timing t2 to the timing t1 at the timing t1. In the mode illustrated in Fig. 11, since a change in the rotation speed of the rotating shaft 102 does not exist or is extremely small, the average value G is a constant value. The method for calculating the average value G by the average value calculation unit 10 is not limited to the moving average method.

The offset rotation signal generation unit 6 generates the offset rotation signal C by offsetting the cut rotation signal B received from the cut rotation signal generation unit 4 by an amount, which is obtained by subtracting the average value G from the limit value Vu, to approach the limit value Vu. Namely, in the second embodiment, the offset rotation signal generation unit 6 calculates the offset amount for offsetting the cut rotation signal B so as to correspond to a change in the rotation speed of the rotating shaft 102.

### (Actions and effects of vibration monitoring device according to second embodiment)

According to the second embodiment, since the magnitude (offset amount) by which the cut rotation signal B is offset corresponds to the average value G of the cut rotation signal B calculated in real time during the rotation of the rotating shaft 102, the vibration of the rotating shaft 102 can be evaluated in real time. Further, the vibration of the rotating shaft 102 can be evaluated more accurately compared to when the magnitude by which the cut rotation signal B is offset is a fixed value.

### <Third embodiment>

The vibration monitoring device 1 according to a third embodiment of the present disclosure will be described. The third embodiment is different from the second embodiment in that the third embodiment further includes the second filter 12, but the other configurations are the same as the configurations described in the second embodiment. In the third embodiment, the same components as those in the second embodiment are denoted by the same reference signs, and the detailed descriptions thereof will not be repeated. In some embodiments, the vibration monitoring device 1 is configured by adding a second filter 12 to the vibration monitoring device 1 according to the first embodiment.

### (Actions and effects of vibration monitoring device according to third embodiment)

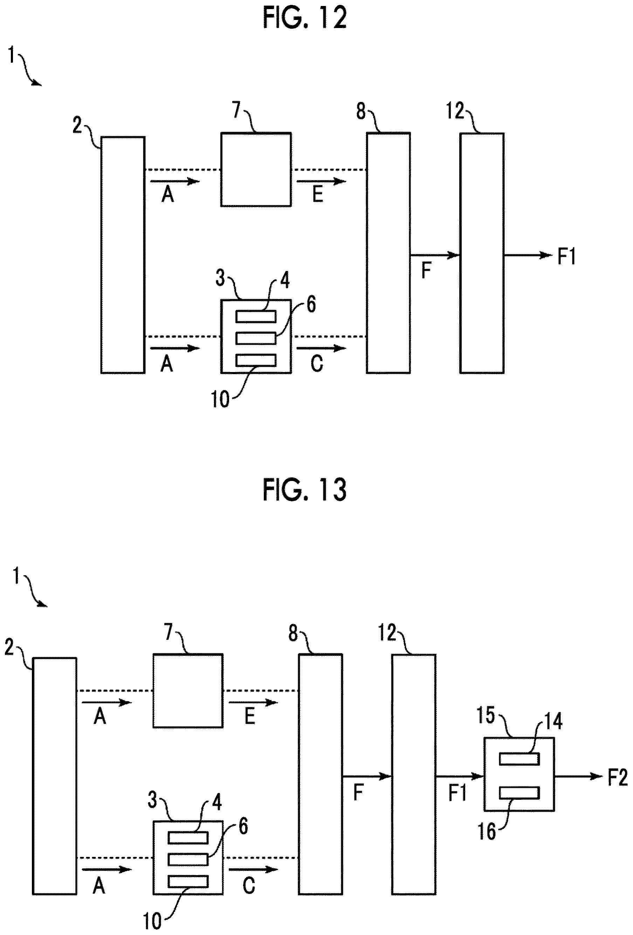

Fig. 12 is a diagram schematically showing a configuration of the vibration monitoring device 1 according to the third embodiment. As illustrated in Fig. 12, the vibration monitoring device 1 further includes the second filter 12.

In the mode illustrated in Fig. 12, the second filter 12 is electrically connected to the first filter 8, and the vibration signal F output (extracted) from the first filter 8 is input to the second filter 12. The second filter 12 receives the vibration signal F to extract the vibration signal F (hereinafter, the vibration signal F is referred to as a "shaped vibration signal F1") having a frequency larger than a second cutoff frequency P2 set in advance from the vibration signal F. Namely, the second filter 12 is a high-pass filter. The second cutoff frequency P2 is smaller than the first cutoff frequency P1. The second cutoff frequency P2 may be a fixed value. The second cutoff frequency P2 is less than 10 Hz.

### (Actions and effects of vibration monitoring device according to third embodiment)

The vibration signal F having a frequency smaller than the second cutoff frequency P2 in the vibration signal F may include information other than the vibration information of the rotating shaft 102. Particularly, by setting the second cutoff frequency P2 to less than 10 Hz, the influence of rotation synchronous vibration of the rotating shaft 102 and the influence of disturbance in other devices can be removed. According to the third embodiment, since the second filter 12 extracts a signal having a frequency larger than the second cutoff frequency P2 from the vibration signal F as the shaped vibration signal F1, the monitoring accuracy of the vibration monitoring device 1 can be improved.

### <Fourth embodiment>

The vibration monitoring device 1 according to a fourth embodiment of the present disclosure will be described. The fourth embodiment is different from the third embodiment in that the fourth embodiment further includes a storage unit 14 and a vibration measurement unit 16, but the other configurations are the same as the configurations described in the third embodiment. In the fourth embodiment, the same components as those in the third embodiment are denoted by the same reference signs, and the detailed descriptions thereof will not be repeated. In some embodiments, the vibration monitoring device 1 is configured by adding the storage unit 14 and the vibration measurement unit 16 to the vibration monitoring device 1 according to the first embodiment or the vibration monitoring device 1 according to the second embodiment.

Fig. 13 is a diagram schematically showing a configuration of the vibration monitoring device 1 according to the fourth embodiment. As illustrated in Fig. 13, the vibration monitoring device 1 includes a post-processing device 15 including the storage unit 14 and the vibration measurement unit 16. The post-processing device 15 is electrically connected to the second filter 12, and can acquire the shaped vibration signal F1 output from the second filter 12.

The post-processing device 15 is a computer such as an electronic control device, similarly to the processing device 3 and the output device 7 described above, and includes a processor such as a CPU or a GPU (not illustrated), a memory such as a ROM or a RAM, an I/O interface, and the like. The post-processing device 15 realizes each functional unit (the storage unit 14 and the vibration measurement unit 16) included in the post-processing device 15 by operating (calculating or the like) the processor according to a command of a program loaded into the memory. In some embodiments, the post-processing device 15 is a cloud server provided in a cloud environment. In the fourth embodiment, the post-processing device 15 is provided separately from the processing device 3 and the output device 7; however, the present disclosure is not limited to this mode. In some embodiments, the processing device 3 includes the storage unit 14 and the vibration measurement unit 16.

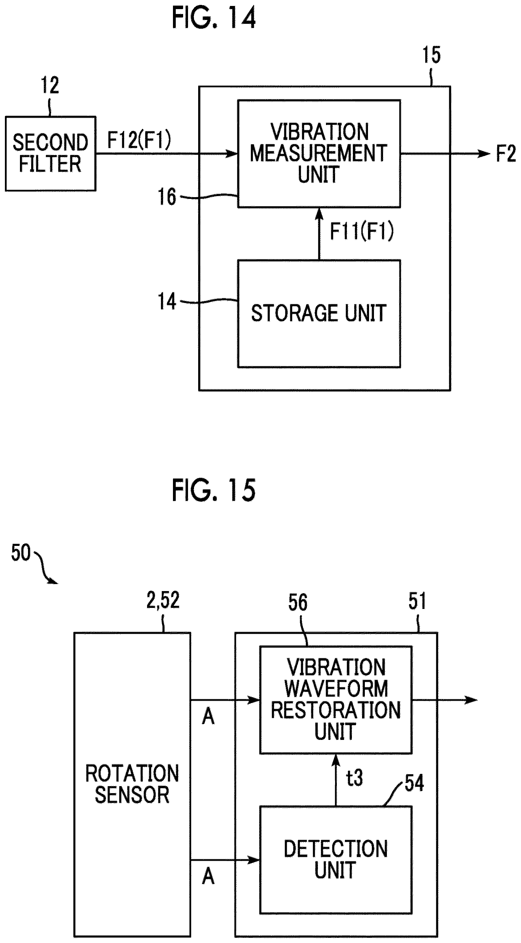

Fig. 14 is a schematic functional block diagram of the post-processing device 15 according to the fourth embodiment. The storage unit 14 stores a shaped first vibration signal F11 (F1) at a first rotation speed of the rotating shaft 102. The first rotation speed is 30 rpm or less. When the vibration measurement unit 16 receives a second vibration signal F12 (F1) at a second rotation speed larger than the first rotation speed from the second filter 12, the vibration measurement unit 16 acquires the first vibration signal F11 from the storage unit 14. Then, the vibration measurement unit 16 subtracts the shaped first vibration signal F11 from the second vibration signal F12. In the fourth embodiment, the storage unit 14 stores the shaped first vibration signal F11; however, the present disclosure is not limited to this mode. In some embodiments, the storage unit 14 stores the vibration signal F before being shaped by the second filter 12.

### (Actions and effects of vibration monitoring device according to fourth embodiment)

When the rotating shaft 102 rotates at 30 rpm or less, the vibration generated by the rotation is very small. For this reason, the shaped first vibration signal F11 that is extracted when the rotating shaft rotates at 30 rpm or less can be deemed to form a waveform in which the vibration information of the rotating shaft 102 is not included. Namely, the waveform of the first vibration signal F11 is mainly formed by the outer peripheral shape of the rotating shaft 102. According to the fourth embodiment, a vibration signal F2 having a waveform that is mainly formed by the vibration of the rotating shaft 102 can be extracted (acquired) by subtracting the shaped first vibration signal F11 at the first rotation speed from the second vibration signal F12 at the second rotation speed.

<Fifth embodiment>

### (Configuration of vibration monitoring device according to fifth embodiment)

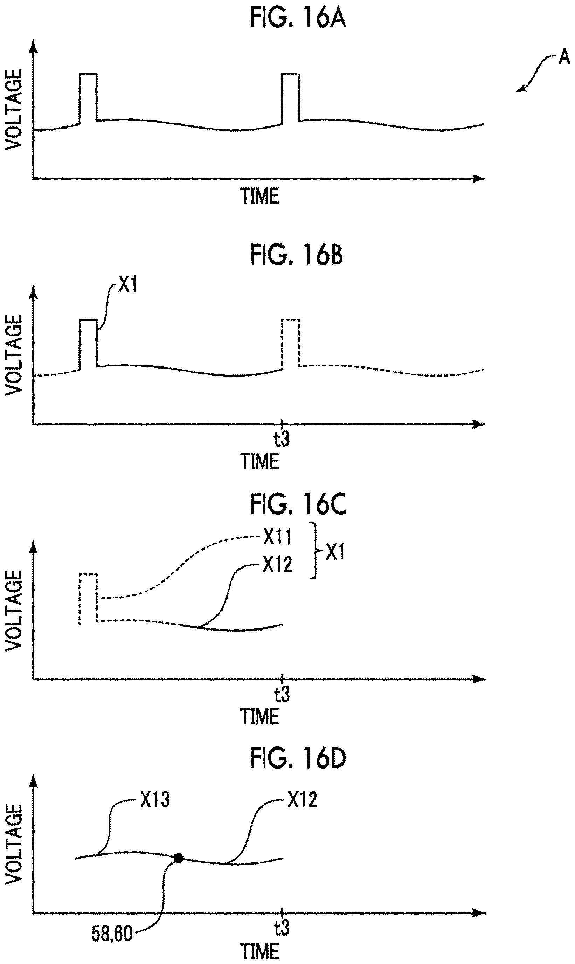

A vibration monitoring device 50 according to a fifth embodiment of the present disclosure will be described. Fig. 15 is a diagram schematically showing a configuration of the vibration monitoring device 50 according to the fifth embodiment. Each of Figs. 16A to 16D is a diagram for describing an operation of a vibration waveform restoration unit 56. As illustrated in Fig. 15, the vibration monitoring device 50 includes a rotation sensor 52, a detection unit 54, and the vibration waveform restoration unit 56. Since the rotation sensor 52 according to the fifth embodiment has the same configuration as the rotation sensor 2 described in the first embodiment, the description thereof will not be repeated.

In the fifth embodiment, as illustrated in Fig. 15, the vibration monitoring device 50 includes a restoration device 51 including the detection unit 54 and the vibration waveform restoration unit 56. The restoration device 51 is electrically connected to the rotation sensor 52, and can acquire the rotation signal A output from the rotation sensor 52. The restoration device 51 is a computer such as an electronic control device, and includes a processor such as a CPU or a GPU (not illustrated), a memory such as a ROM or a RAM, an I/O interface, and the like. The restoration device 51 realizes each functional unit (the detection unit 54 and the vibration waveform restoration unit 56) included in the restoration device 51 by operating (calculating or the like) the processor according to a command of a program loaded into the memory. In some embodiments, the restoration device 51 is a cloud server provided in a cloud environment.

The detection unit 54 detects a timing at which the pulse of the rotation signal A is generated (hereinafter, referred to as a pulse generation timing t3). The detection unit 54 continuously receives the rotation signal A output from the rotation sensor 52. The pulse generation timing t3 is a timing at which the displacement of the waveform of the rotation signal A is increased (the amount of change in voltage value is greater than a predetermined amount).

As illustrated in Fig. 16A, the vibration waveform restoration unit 56 continuously receives the rotation signal A output from the rotation sensor 52. Then, as illustrated in Fig. 16B, when the detection unit 54 detects the pulse generation timing t3, the vibration waveform restoration unit 56 acquires one waveform X1 of the rotation signal A immediately preceding the pulse generation timing t3. Then, the vibration waveform restoration unit 56 restores the one waveform X1 as a vibration waveform of the rotating shaft 102 by replacing a first half portion X11 of the one waveform X1 including the immediately preceding pulse of the rotation signal A with the reverse phase of a second half portion X12 of the one waveform X1. Specifically, as illustrated in Fig. 16C, the vibration waveform restoration unit 56 deletes the first half portion X11 of the waveform X1. Then, as illustrated in Fig. 16D, a rear end 60 of a reverse phase waveform X13 that is the reverse phase of the second half portion X12 of the waveform X1 is connected to a front end 58 of the second half portion X12 of the waveform X1. The vibration waveform restoration unit 56 executes the above-described operations in Figs. 16A to 16D each time the detection unit 54 detects the pulse generation timing t3.

### (Actions and effects of vibration monitoring device according to fifth embodiment)

According to the fifth embodiment, when the pulse of the rotation signal A is detected by the detection unit 54, the vibration waveform of the rotating shaft 102 is restored by the vibration waveform restoration unit 56. For this reason, the vibration of the rotating shaft 102 can be evaluated in real time from the rotation signal A of the rotating shaft 102.

### (Vibration monitoring method)

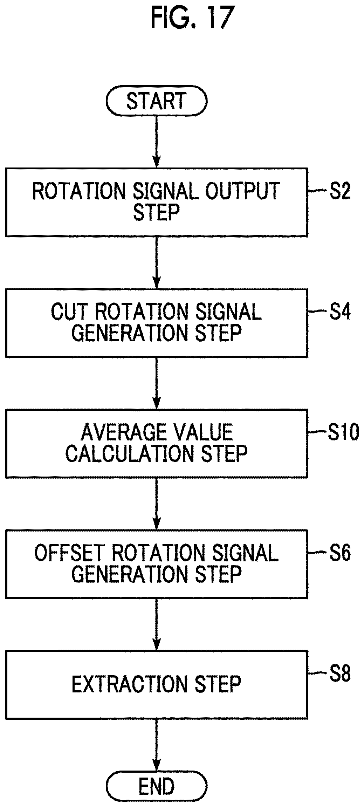

Fig. 17 is a flowchart of the vibration monitoring method according to the present disclosure. As shown in Fig. 17, the vibration monitoring method includes a rotation signal output step S2, a cut rotation signal generation step S4, an offset rotation signal generation step S6, and an extraction step S8.

In the rotation signal output step S2, the rotation signal A synchronized with the rotation of the rotating shaft 102 is output. In the cut rotation signal generation step S4, when the rotation signal A is output, the cut rotation signal B obtained by replacing portions of the rotation signal A equal to or greater than the limit value Vu set in advance with the limit value Vu and by causing portions of the rotation signal A less than the limit value Vu to remain as the rotation signal A is generated. In the offset rotation signal generation step S6, the offset rotation signal C obtained by offsetting the cut rotation signal B to approach the limit value Vu is generated. In the extraction step S8, a signal in the passband set based on the rotation speed D of the rotating shaft 102 is extracted from the offset rotation signal C as the vibration signal F from which the vibration information of the rotating shaft 102 can be acquired.

In the mode illustrated in Fig. 17, the vibration monitoring method further includes an average value calculation step S10. In the average value calculation step S10, the average value G of the magnitudes of the cut rotation signal B is calculated in real time during the rotation of the rotating shaft 102. Then, in the offset rotation signal generation step S6 described above, the offset rotation signal C obtained by offsetting the cut rotation signal B by an amount, which is obtained by subtracting the average value G from the limit value Vu, to approach the limit value Vu is generated.

According to the vibration monitoring method illustrated in Fig. 17, when the rotation signal A is output, the offset rotation signal C is generated, and the vibration signal F is extracted in real time from the offset rotation signal C. For this reason, the vibration of the rotating shaft 102 can be evaluated in real time from the rotation signal A of the rotating shaft 102. Further, the cut rotation signal B is such that portions of the rotation signal A equal to or greater than the limit value Vu are replaced with the limit value Vu. For this reason, the influence of the pulses of the rotation signal A in the extraction step S8 can be suppressed.

According to the vibration monitoring method illustrated in Fig. 17, since the magnitude by which the cut rotation signal B is offset corresponds to the average value G of the cut rotation signal B calculated in real time during the rotation of the rotating shaft 102, the vibration of the rotating shaft 102 can be evaluated in real time. Further, the vibration of the rotating shaft 102 can be evaluated more accurately compared to when the magnitude by which the cut rotation signal B is offset is a fixed value.

The contents described in each embodiment are understood, for example, as follows.
[1] A vibration monitoring device (1) according to the present disclosure includes a rotation sensor (2) that outputs a rotation signal (A) synchronized with a rotation of a rotating shaft (102); a cut rotation signal generation unit (4) that generates a cut rotation signal (B) by replacing a portion of the rotation signal equal to or greater than a limit value (Vu) set in advance with the limit value and by causing a portion of the rotation signal less than the limit value to remain as the rotation signal, when the rotation signal is output from the rotation sensor; an offset rotation signal generation unit (6) that generates an offset rotation signal (C) by offsetting the cut rotation signal to approach the limit value; and a first filter (8) that extracts a signal in a passband set based on a rotation speed (D) of the rotating shaft from the offset rotation signal as a vibration signal (F) from which vibration information of the rotating shaft is acquirable.
   According to the configuration described in [1], when the rotation signal is output from the rotation sensor, the offset rotation signal is generated, and the vibration signal is extracted from the offset rotation signal. For this reason, the vibration of the rotating shaft can be evaluated in real time from the rotation signal of the rotating shaft. Further, the cut rotation signal is such that the portion of the rotation signal equal to or greater than the limit value is replaced with the limit value. For this reason, the influence of the pulses of the rotation signal on the extraction of the vibration signal by the first filter can be suppressed.
[2] In some embodiments, in the configuration described in [1], there is further provided an average value calculation unit (10) that calculates an average value (G) of magnitudes of the cut rotation signal in real time during the rotation of the rotating shaft. The offset rotation signal generation unit generates the offset rotation signal by offsetting the cut rotation signal by an amount, which is obtained by subtracting the average value from the limit value, to approach the limit value.
   According to the configuration described in [2], since the magnitude by which the cut rotation signal is offset corresponds to the average value of the cut rotation signal calculated in real time during the rotation of the rotating shaft, the vibration of the rotating shaft can be evaluated in real time. Further, the vibration of the rotating shaft can be evaluated more accurately compared to when the magnitude by which the cut rotation signal is offset is a fixed value.
[3] In some embodiments, in the configuration described in [1] or [2], each of the limit value and the rotation signal is a voltage value, and the limit value is smaller than a maximum value of the rotation signal.
   According to the configuration described in [3], the generation of the cut rotation signal by replacing the portion of the rotation signal equal to or greater than the limit value with the limit value is facilitated, and the effect of suppressing the influence of the pulses of the rotation signal can be suppressed.
[4] In some embodiments, in the configuration described in any one of [1] to [3], there is further provided a second filter (12) that extracts a signal having a frequency larger than a cutoff frequency (P2) set in advance from the vibration signal extracted by the first filter.
   The signal having a frequency smaller than the cutoff frequency in the vibration signal may include information other than the vibration information of the rotating shaft. According to the configuration described in [4], since the second filter extracts the signal having a frequency larger than the cutoff frequency from the vibration signal, the monitoring accuracy of the vibration monitoring device can be improved.
[5] In some embodiments, in the configuration described in any one of [1] to [4], there are further provided a storage unit (14) that stores the vibration signal at a first rotation speed of the rotating shaft; and a vibration measurement unit (16) that subtracts the vibration signal at the first rotation speed, which is stored in the storage unit, from the vibration signal at a second rotation speed larger than the first rotation speed. The first rotation speed is 30 rpm or less.
   When the rotating shaft rotates at 30 rpm or less, the vibration generated by the rotation is very small. For this reason, the vibration signal that is extracted when the rotating shaft rotates at 30 rpm or less can be deemed to form a waveform in which the vibration information of the rotating shaft is not included (waveform formed by the rotating shaft itself). According to the configuration described in [5], a signal having a waveform that is mainly formed by the vibration of the rotating shaft is acquirable by subtracting the vibration signal at the first rotation speed from the vibration signal at the second rotation speed.
[6] In some embodiments, in the configuration described in any one of [1] to [5], there is further provided an output device (7) that outputs a filter command value (E) corresponding to the rotation speed of the rotating shaft calculated from the rotation signal. The first filter sets the passband according to the filter command value.
   According to the configuration described in [6], by appropriately setting the passband of the first filter according to the rotation speed of the rotating shaft, the signal in the passband suitable for evaluating the vibration of the rotating shaft can be extracted from the rotation signal synchronized with the rotation of the rotating shaft.
[7] A vibration monitoring device (50) according to the present disclosure includes a rotation sensor (52) that outputs a rotation signal synchronized with a rotation of a rotating shaft; a detection unit (54) that detects a timing (t3) at which a pulse of the rotation signal is generated; and a vibration waveform restoration unit (56) that restores one waveform (X1) of the rotation signal immediately preceding the timing detected by the detection unit as a vibration waveform of the rotating shaft by replacing a first half portion (X11) of the one waveform including the immediately preceding pulse of the rotation signal with a reverse phase of a second half portion (X12) of the one waveform.
   According to the configuration described in [7], when the pulse of the rotation signal is detected by the detection unit, the vibration waveform of the rotating shaft is restored by the vibration waveform restoration unit. For this reason, the vibration of the rotating shaft can be evaluated in real time from the rotation signal of the rotating shaft.
[8] In some embodiments, in the configuration described in any one of [1] to [7], one groove (118) is formed on an outer peripheral surface (116) of the rotating shaft, and the rotation sensor outputs a distance (d) to the outer peripheral surface of the rotating shaft as the rotation signal.
   According to the configuration described in [8], the vibration of the rotating shaft in which one groove is formed on the outer peripheral surface can be evaluated in real time.
[9] A turbocharger (100) according to some embodiments includes the vibration monitoring device described in any one of [1] to [8]; a compressor (104) provided at one end portion of the rotating shaft; and a turbine (106) provided at the other end portion of the rotating shaft.
   According to the configuration described in [9], it is possible to provide the turbocharger capable of evaluating vibration of the rotating shaft of the turbocharger in real time from the rotation signal of the rotating shaft of the turbocharger.
[10] A vibration monitoring method according to the present disclosure includes a step (S2) of outputting a rotation signal synchronized with a rotation of a rotating shaft; a step (S4) of generating a cut rotation signal by replacing a portion of the rotation signal equal to or greater than a limit value set in advance with the limit value and by causing a portion of the rotation signal less than the limit value to remain as the rotation signal, when the rotation signal is output; a step (S6) of generating an offset rotation signal by offsetting the cut rotation signal to approach the limit value; and a step (S8) of extracting a signal in a passband set based on a rotation speed of the rotating shaft from the offset rotation signal as a vibration signal from which vibration information of the rotating shaft is acquirable.
   According to the method described in [10], when the rotation signal is output, the offset rotation signal is generated, and the vibration signal is extracted from the offset rotation signal. For this reason, the vibration of the rotating shaft can be evaluated in real time from the rotation signal of the rotating shaft. Further, the cut rotation signal is such that the portion of the rotation signal equal to or greater than the limit value is replaced with the limit value. For this reason, the influence of the pulse of the rotation signal in the step of extracting the vibration signal can be suppressed.
[11] In some embodiments, in the method described in [10], there is further provided a step (S10) of calculating an average value of magnitudes of the cut rotation signal in real time during the rotation of the rotating shaft. In the step of generating the offset rotation signal, the cut rotation signal is offset by an amount, which is obtained by subtracting the average value from the limit value, to approach the limit value.

According to the method described in [11], since the magnitude by which the cut rotation signal is offset corresponds to the average value of the cut rotation signal calculated in real time during the rotation of the rotating shaft, the vibration of the rotating shaft can be evaluated in real time. Further, the vibration of the rotating shaft can be evaluated more accurately compared to when the magnitude by which the cut rotation signal is offset is a fixed value.

### Reference Signs List

- 1: Vibration monitoring device
- 2: Rotation sensor
- 4: Cut rotation signal generation unit
- 6: Offset rotation signal generation unit
- 7: Output device
- 8: First filter
- 10: Average value calculation unit
- 12: Second filter
- 14: Storage unit
- 16: Vibration measurement unit
- 50: Vibration monitoring device
- 51: Restoration device
- 52: Rotation sensor
- 54: Detection unit
- 56: Vibration waveform restoration unit
- 100: Turbocharger
- 102: Rotating shaft
- 104: Compressor
- 106: Turbine
- 116: Outer peripheral surface
- 118: Groove
- S2: Rotation signal output step
- S4: Cut rotation signal generation step
- S6: Offset rotation signal generation step
- S8: Extraction step
- S10: Average value calculation step
- A: Rotation signal
- B: Cut rotation signal
- C: Offset rotation signal
- D: Rotation speed
- E: Filter command value
- F: Vibration signal
- G: Average value
- P1: First cutoff frequency
- P2: Second cutoff frequency
- Vu: Limit value
- X1: Waveform
- X11: First half portion of waveform
- X12: Second half portion of waveform
- d: Distance
- t3: Pulse generation timing

## Claims

1. A vibration monitoring device comprising:
a rotation sensor that outputs a rotation signal synchronized with a rotation of a rotating shaft;
a cut rotation signal generation unit that generates a cut rotation signal by replacing a portion of the rotation signal equal to or greater than a limit value set in advance with the limit value and by causing a portion of the rotation signal less than the limit value to remain as the rotation signal, when the rotation signal is output from the rotation sensor;
an offset rotation signal generation unit that generates an offset rotation signal by offsetting the cut rotation signal to approach the limit value; and
a first filter that extracts a signal in a passband set based on a rotation speed of the rotating shaft from the offset rotation signal as a vibration signal from which vibration information of the rotating shaft is acquirable.

2. The vibration monitoring device according to Claim 1, further comprising:
an average value calculation unit that calculates an average value of magnitudes of the cut rotation signal in real time during the rotation of the rotating shaft,
wherein the offset rotation signal generation unit generates the offset rotation signal by offsetting the cut rotation signal by an amount, which is obtained by subtracting the average value from the limit value, to approach the limit value.

3. The vibration monitoring device according to Claim 1 or 2,
wherein each of the limit value and the rotation signal is a voltage value, and
the limit value is smaller than a maximum value of the rotation signal.

4. The vibration monitoring device according to Claim 1 or 2, further comprising:
a second filter that extracts a signal having a frequency larger than a cutoff frequency set in advance from the vibration signal extracted by the first filter.

5. The vibration monitoring device according to Claim 1 or 2, further comprising:
a storage unit that stores the vibration signal at a first rotation speed of the rotating shaft; and
a vibration measurement unit that subtracts the vibration signal at the first rotation speed, which is stored in the storage unit, from the vibration signal at a second rotation speed larger than the first rotation speed,
wherein the first rotation speed is 30 rpm or less.

6. The vibration monitoring device according to Claim 1 or 2, further comprising:
an output device that outputs a filter command value corresponding to the rotation speed of the rotating shaft calculated from the rotation signal,
wherein the first filter sets the passband according to the filter command value.

7. A vibration monitoring device comprising:
a rotation sensor that outputs a rotation signal synchronized with a rotation of a rotating shaft;
a detection unit that detects a timing at which a pulse of the rotation signal is generated; and
a vibration waveform restoration unit that restores one waveform of the rotation signal immediately preceding the timing detected by the detection unit as a vibration waveform of the rotating shaft by replacing a first half portion of the one waveform including the immediately preceding pulse of the rotation signal with a reverse phase of a second half portion of the one waveform.

8. The vibration monitoring device according to any one of Claims 1, 2, and 7,
wherein one groove is formed on an outer peripheral surface of the rotating shaft, and
the rotation sensor outputs a distance to the outer peripheral surface of the rotating shaft as the rotation signal.

9. A turbocharger comprising:
the vibration monitoring device according to any one of claims 1, 2, and 7;
a compressor provided at one end portion of the rotating shaft; and
a turbine provided at the other end portion of the rotating shaft.

10. A vibration monitoring method comprising:
a step of outputting a rotation signal synchronized with a rotation of a rotating shaft;
a step of generating a cut rotation signal by replacing a portion of the rotation signal equal to or greater than a limit value set in advance with the limit value and by causing a portion of the rotation signal less than the limit value to remain as the rotation signal, when the rotation signal is output;
a step of generating an offset rotation signal by offsetting the cut rotation signal to approach the limit value; and
a step of extracting a signal in a passband set based on a rotation speed of the rotating shaft from the offset rotation signal as a vibration signal from which vibration information of the rotating shaft is acquirable.

11. The vibration monitoring method according to Claim 10, further comprising:
a step of calculating an average value of magnitudes of the cut rotation signal in real time during the rotation of the rotating shaft,
wherein in the step of generating the offset rotation signal, the cut rotation signal is offset by an amount, which is obtained by subtracting the average value from the limit value, to approach the limit value.
